# EUROPÄISCHE PATENTSCHRIFT

(11) **EP 0 408 986 B1**
(45) Veröffentlichungstag und Bekanntmachung des Hinweises auf die Patenterteilung: **18.01.1995**
(21) Anmeldenummer: 90112747.2
(22) Anmeldetag: 04.07.1990
(51) Int. Cl.: H02K 23/66

(54) **Schaltvorrichtung für elektrische Umschaltung von Elektrowerkzeugen**
Switch device for electrical change-over switching of electric tools
Dispositif de couplage pour la commutation électrique d'outils électriques

(30) Priorität: 15.07.1989 DE 3923421; 14.02.1990 DE 4004463
(43) Veröffentlichungstag der Anmeldung: 23.01.1991
(73) Patentinhaber: Kress-elektrik GmbH + Co. Elektromotorenfabrik, D-72406 Bisingen (DE)
(72) Erfinder: Kress, Willy, D-7457 Bisingen (DE); Binder, Alfred, D-7457 Bisingen (DE)
(74) Vertreter: Otte, Peter, Dipl.-Ing.

(56) Entgegenhaltungen:
- EP-A- 0 224 053
- BE-A- 481 533
- FR-A- 1 142 933
- FR-A- 2 620 582
- US-A- 3 440 465
- US-A- 3 601 724

## Beschreibung

### Stand der Technik

Die Erfindung geht aus von einer Schaltvorrichtung nach dem Oberbegriff des Anspruchs 1.

Bei einer bekannten Schaltvorrichtung dieser Art (US-A-3 440 465) ist ein Reversiermechanismus für den elektrischen Antriebsmotor so ausgebildet, daß ein innerer Bürstenhalter-Schaltring in axialer Schichtung zu einer Reversierplatte angeordnet ist, die von hinten auf das bürstenseitige B-Lagerschild aufgesteckt ist und mit in Richtung auf den Bürstenhalter-Schaltring gerichteten Vorsprüngen in diesen eingreift.

Dabei ist ferner eine hintere, das Gehäuse des Elektrowerkzeugs vervollständigende Abdeckkappe mit einem großzügigen Schlitz versehen, durch welchen der Benutzer mit seinem Finger zur manuellen Verdrehung der innenliegenden Reversierplatte greifen kann.

In dieser Veröffentlichung US-A-3 440 465 ist auch darauf hingewiesen, daß alternativ eine Verdrehung des inneren Kohlebürsten-Trägerrings auch dadurch realisiert werden kann, daß die ganze rückwärtige Abdeckkappe verdrehbar gestaltet wird, die dann allerdings mit der Reversierplatte noch in eine geeignete Drehmitnahme-Verbindung zu bringen ist. Insofern weist die aus dieser Veröffentlichung bekannte Schaltvorrichtung eine ausgeprägte axiale Schichtung auf und nutzt innenliegend das B-Lagerschild des Motors, der allerdings nicht selbsttragend in sich abgeschlossen ausgebildet ist, für Lagerzwecke der Schaltvorrichtung aus.

Ferner ist die Anordnung eines äußeren, am Gehäuse gelagerten Stellrings für sich gesehen bei einem Schrauber bekannt (FR-A-1 142 933) zur Ermöglichung eines Eingriffs in ein Planetengetriebe zur Begrenzung des von dem Schrauber ausgeübten Drehmoments. Dabei ist dieser Stellring von einer Gehäuseringausnehmung aufgenommen.

Vergleichbar mit der verdrehbaren Abdeckkappe der Veröffentlichung US-A-3 440 465 ist eine hintere drehbare Kappe bei einem Elektromotor vorgesehen, durch welche letztlich eine Reversierbarkeit des Motors ermöglicht wird. Die Drehkappe läßt sich durch Einrasten federvorgespannter Kugeln in einer vorgegebenen Winkelposition arretieren.

In ähnlicher Weise sind Rückstellfedern bei der Verdrahtungsanordnung eines Motors eines Elektrowerkzeugs vorgesehen (EP-A-0 224 053), die bei einem kombinierten Ein/Aus- und Rechts/Links-Schalter einen inneren Schaltring in Neutralstellung des Umschalters in seine Ausgangslage zurückbewegen.

Allgemein ist es übliche Praxis, Elektrowerkzeuge, speziell Elektrohandwerkzeuge beispielsweise mit Hilfe von Kippschaltern, etwa mit wippenähnlichem Aufbau, oder durch Schiebeschalter ein- und auszuschalten, wobei diese Schalter in geeigneter Weise außen am Gehäuse befestigt sind bzw. lediglich deren Betätigungsteile durch Gehäuseöffnungen ragen und entsprechend verstellt werden können. Bei vielen Elektrohandgeräten, beispielsweise bei Bohrmaschinen, Bohrhämmern u. dgl. ist es auch üblich, in Verbindung mit dem Ein- und Ausschalten gleichzeitig auch die Drehzahl zu verstellen, indem ein pistolengriffartig von einem Finger umspannter Schiebeschalter bei seiner anfänglichen Bewegung das Elektrowerkzeug einschaltet und eine weitere freie Wegstrecke in der Schalterverstellung dazu dient, beispielsweise ein Potentiometer zu verstellen, welches beispielsweise Teil einer Phasenanschnittschaltung sein kann, durch welchen dann die Drehzahls des das Elektrohandwerkzeug antreibenden Elektromotors bis zum Anschlag hochgefahren werden kann.

Bei sehr vielen Elektrohandwerkzeugen ist es auch üblich, die Drehrichtung umzukehren, beispielsweise bei Schraubern, um Schrauben sowohl ein- als auch ausdrehen zu können. Dies geschieht üblicherweise ebenfalls durch einfache elektrische Umschaltung der Stromzuführung zum Stator und/oder zu den Bürsten, was allerdings bezüglich des Wirkungsgrades nicht optimal ist, da im letzteren Fall eine gleichzeitige mechanisch/geometrische Bürstenverstellung um vorgegebene Winkelbeträge von Vorteil ist.

Der Erfindung liegt die Aufgabe zugrunde, bei einem Elektrowerkzeug die elektrische Umschaltung, also beispielsweise den Ein/Ausschaltvorgang bzw. eine Drehrichtungsumkehr zu vereinfachen, insbesondere auch hinsichtlich der Montage der Betätigungskomponenten, und dabei den Verdrahtungsaufwand drastisch zu reduzieren.

### Vorteile der Erfindung

Das erfindungsgemäße Elektrowerkzeug löst diese Aufgabe mit den kennzeichnenden Merkmalen des Anspruchs 1 und hat den Vorteil, daß eine deutlich betätigbare Stelleinrichtung für mindestens eine der elektrischen Umschaltmöglichkeiten bei einem Elektrohandwerkzeug geboten ist, mit welcher beispielsweise der Ein/Ausschaltvorgang und/oder eine Drehrichtungsumkehr dadurch realisiert werden kann, daß man von außen mechanisch unmittelbar und ohne zusätzliche elektrische Drahtverbindungen direkt in einen Stellbereich am das Elektrohandwerkzeug antreibenden Elektromotor eingreift.

Daher weist ein für die Realisierung vorliegender Erfindung geeigneter Elektromotor innere Schalt- bzw. Stellelemente, vorzugsweise einen inneren Schaltring auf, durch dessen begrenzte Drehbewegung solche electrische Umschaltungen im Bereich des Antriebsmotors vorgenommen werden können. Zu diesem Zweck wirkt der Schaltring in geeigneter Weise mit direkt am Elektromotor angebauten Leitungsbahnen, bevorzugt in einer geeigneten Stanzgitterform ,zusammen, so daß in der jeweils aufbereiteten Form des Stanzgitters beispielsweise durch die innere Schaltringbewegung der Elektromotor ein- und ausgeschaltet werden kann bzw. die optimale Drehrichtungsumkehr mit gleichzeitiger Bürstenverstellung vorgenommen werden kann.

Dabei nimmt die vorliegende Erfindung nur scheinbar einen vermeintlichen Nachteil in Kauf, der darin besteht, daß das Herzstück jedes Elektrohandwerkzeugs, nämlich der elektrische Antriebsmotor ein in sich vollkommen abgeschlossenes, sämtliche erforderlichen Lagerungen für die Rotorwelle und deren einwandfreie Zentrierung sowie für die anderen Motoreinzelteile aufweisendes Antriebsaggregat mit entsprechender Kapselung unter Einschluß des erwähnten Schaltringes ist. Hier kann im übrigen mit Vorteil ein elektrischer Universalmotor eingesetzt werden, wie er in dem deutschen Gebrauchsmuster G 89 08 645.5, dessen Priorität beansprucht ist, bzw. DE-OS 39 23 421 beschrieben ist. Es wird daher im folgenden auch unter Hinweis auf diese verfügbare Beschreibung von einer ins einzelne gehenden Erläuterung dieses elektrischen Universalmotors hier abgesehen, obwohl es sich versteht, daß jeder andere, einen Schaltring in geeigneter Ausbildung aufweisende elektrische Antriebsmotor für die Realisierung vorliegender Erfindung ebenfalls geeignet ist.

Die Erfindung läßt sich mit besonderem Vorteil dann einsetzen, wenn das Gehäuse selbst aus mehreren, jedoch in der allgemeinen Axialrichtung des Elektrohandwerkzeugs unterteilten Bereichen besteht, wobei ein Hauptgehäuseteil eine zylindrische, geschlossen rohrförmige Struktur aufweist, so wie dies bei speziell ausgebildeten Profiwerkzeugen für sich gesehen schon bekannt ist, in welche das Antriebsaggregat dann lediglich bis zu einem Sitzanschlag eingeschoben zu werden braucht. Ein solches Hauptgehäuse von zylindrischer Grundstruktur bietet einen besonders geeigneten Sitz für die Anordnung eines äußeren Stellrings, der von kreisförmiger Gestalt die Gehäuserohrform als geschlossener Ring umgibt und formschlüssig mit radialen Vorsprüngen nach innen greift zum Schaltring und diesen bei eigener manueller Verstellung mitnimmt.

Durch die Unterteilung des Gehäuses in den Hauptgehäuseteil und ein an dieses axial ansetzbares Abdeckteil schafft man auch im Übergang zwischen diesen beiden Gehäuseteilen einen Bereich, wo der äußere Stellring problemlos aufgebracht und gegen ein Verschieben durch den hinteren Abdeckteil gehalten werden kann.

Der Aufbau eines solchen Elektrohandwerkzeugs kann dann so getroffen sein, daß an das in sich abgeschlossene starre, selbsttragende Aggregat des Elektroantriebsmotors auf der Abtriebsseite, also dort, wo das Motorwellenendstück, entweder selbst als Zahnrad ausgebildet oder ein Ritzel tragend, das antriebsseitige A-Lagerschild überragt, an dieses das Getriebe des jeweiligen Elektrohandwerkzeugs, also beispielsweise der Winkelkopf für einen Winkelschleifer oder der Getriebekopf einer Handbohrmaschine angeflanscht wird; anschließend wird der Elektroantriebsmotor in das rohrförmige Hauptgehäuse eingeschoben; die Verbindung mit diesem erfolgt über Bohrungen vom Getriebekopf aus, so daß der Aufbau sozusagen von hinten vorgenommen wird und der Elektromotor lediglich auf der zum Getriebe abgewandten Seite, vorzugsweise dämpfend nachgiebig mit einem Lagerschildvorsprung in eine Gehäuseausnehmung zur sicheren Halterung auch auf dieser Seite eingreift.

Anschließend kann man auf das nach hinten noch offene Gehäuse den Stellring bis zu einem Anschlag aufschieben, der die elektrischen Schaltverbindungen mit dem Motor herstellt. Der Aufbau vervollständigt sich dann durch das hintere Gehäuseabdeckteil, welches mit seiner vorderen ringförmigen Randkante in eine diese Randkante aufnehmende Ringnut im Stellring eingreift und selbst an einem nach hinten gerichteten, sich verjüngenden Vorsprung des Hauptgehäuses anschlägt und dort auch verschraubt oder sonstwie befestigt werden kann. Auf diese Weise läßt sich der Stellring problemlos an Ort und Stelle halten, denn nach hinten ist er durch die eingreifende Ringkante des hinteren Gehäuseabdeckteils gesichert und nach vorne kann eine Sicherung gegen axiales Verschieben dadurch erfolgen, daß Stellring und Hauptgehäuse an dieser Stelle mit abgetreppten, aufeinander ausgerichteten Ringnuten auf Anschlag anliegen.

Der Stellring sitzt dann außen auf dem rohrförmigen, geschlossenen Gehäusekörper auf und greift mit nach innen durch Gehäusedurchbrechungen gerichteten Vorsprüngen auf den Schaltring im Bereich des bürstenseitigen B-Lagerschilds des Antriebsmotors über, auf das er ausgerichtet ist, so daß eine Schaltringverstellung zur Reversierung der Drehrichtung bzw. zum Ein- und Ausschalten des Geräts möglich ist.

Eine vorteilhafte Ausgestaltung vorliegender Erfindung besteht schließlich noch darin, daß bei Einsatz des Stellringes als Instrument zum Ein- und Ausschalten des Elektromotors der Stellring eine selbsttätig wirkende Rückführung durch in geeigneter Weise angreifende Federn aufweist und so in der eingeschalteten Position verriegelt werden kann, nämlich durch eine äußere Wippe, die mit einem hakenartigen Vorsprung in eine Ausnehmung der Hauptgehäusewandung eingreift, daß bei Zurückdrücken der Wippe bzw. Ablegen des Elektrogeräts in geeignete Position die Wippe auslöst und der Schaltring durch seine eigene Federvorspannung in die Ursprungsposition zurückschnellt.

### Zeichnung

Ausführungsbeispiele der Erfindung sind in der Zeichnung dargestellt und werden in der nachfolgenden Beschreibung näher erläutert. Es zeigen:
- Fig. 1: als Teilausschnitt eine Teildarstellung eines in einem rohrförmigen Hauptgehäuse (eines Winkelschleifers) aufgenommenen Elektroantriebsmotors mit Anordnung des äußeren Stellrings und seinem Durchgriff auf den Elektromotor-Schaltring;
- Fig. 2: das rohrförmige Hauptgehäuse eines Elektrohandwerkzeugs, speziell für einen Winkelschleifer, mit aufgezogenem Stellring;
- Fig. 3: die Darstellung der Fig. 2 in einer Ansicht von rechts, wobei sich der Stellring in seiner ausgelenkten Position befindet, während die
- Fig. 4: die gleiche Ansicht zeigt mit dem Stellring in der Ruheposition; die
- Figuren 5 und 6: zeigen Ausschnittdarstellungen innerhalb der strichpunktierten Umrandung der Figuren 3 und 4 der Arretierwippe für den Stellring in der Eingriffsposition (Fig. 5) und in der Ruheposition (Fig. 6);
- Fig. 7: zeigt zum besseren Verständnis des Gesamtaufbaus des Elektrohandwerkzeugs (Winkelschleifer als mögliche Ausführungsform) eine Draufsicht auf die Darstellung der Fig. 1 von rechts, aus welcher auch der innere Schaltring des Elektromotors erkennbar ist und die
- Fig. 8: zeigt eine mögliche Ausführungsform eines Elektrohandwerkzeugs mit äußerem Stellring.

### Beschreibung der Ausführungsbeispiele

Der Grundgedanke vorliegender Erfindung besteht darin, außen am Gehäuse eines Elektrowerkzeugs, speziell eines Elektrohandwerkzeugs, in Höhe des B-Lagerschildes des dieses Elektrohandwerkzeug antreibenden Elektromotors einen verdrehbaren Stellring anzuordnen, der Verdrehungen in der einen oder anderen Richtung um vorgegebene Winkelpositionen ermöglicht und mit Vorsprüngen nach innen, z.B.durch entsprechend ausgeschnittene Gehäuseöffnungen bis zum inneren Schaltring des Elektromotors greift, so daß es möglich ist, durch Betätigung des Stellringes elektrische Umschaltungen im Bereich des Elektroantriebsmotors unmittelbar vorzunehmen.

Bevor die Erfindung im einzelnen erläutert wird, wird darauf aufmerksam gemacht, daß ein besonders bevorzugtes Ausführungsbeispiel einer elektrischen Antriebsquelle, nämlich ein speziell schon für die Erfordernisse vorliegender Erfindung ausgebildeter und endmontierter, in sich abgeschlossener elektrischer Universalmotor umfassend beschrieben ist im DE-GM 89 08 646.5, dessen Priorität hier beansprucht ist, so daß im folgenden dieser Antriebsmotor lediglich noch so weit, speziell von seiner äußeren Form her, erläutert wird, wie dies zum Verständnis der Erfindung notwendig ist. Es wird aber darauf aufmerksam gemacht, daß die verfügbare Beschreibung dieses bekannten Antriebsmotors ausdrücklich zum offenbarten Gegenstand auch der vorliegenden Erfindungsbeschreibung gemacht und auf diese verwiesen wird.

Andererseits versteht es sich, daß sich für die Realisierung vorliegender Erfindung auch sonstige Universalmotoren eignen, sofern sie über einen verdrehbaren Schaltring verfügen, der die Vornahme elektrischer Umschaltungen für den Elektromotor erlaubt. Ferner wird darauf hingewiesen, daß die nachfolgende Detailerläuterung speziell auf Aufbau und Ein/Ausschaltmechanismus bei einem Winkelschleifer gerichtet ist, wobei es sich aber versteht, daß die durch die Erfindung gebotenen elektrischen Eingriffsmöglichkeiten in den Betrieb des Antriebsmotors insbesondere auch für solche Elektrohandwerkzeuge geeignet und einsetzbar sind, bei denen über die Stellringverstellung eine Drehrichtungsumkehr ermöglicht wird, die bei dem hier beschriebenen Winkelschleifer allerdings nicht notwendig ist.

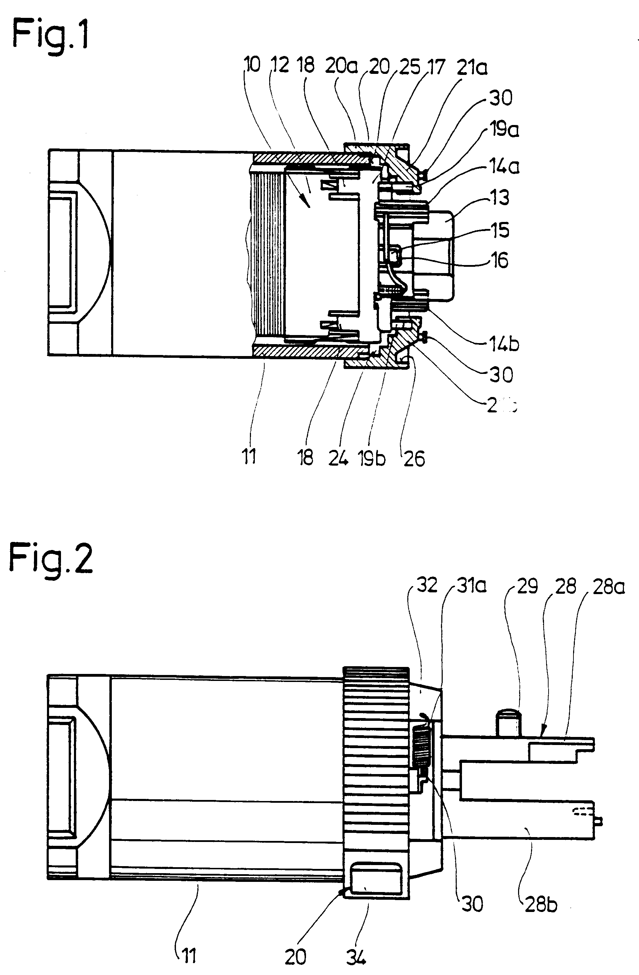

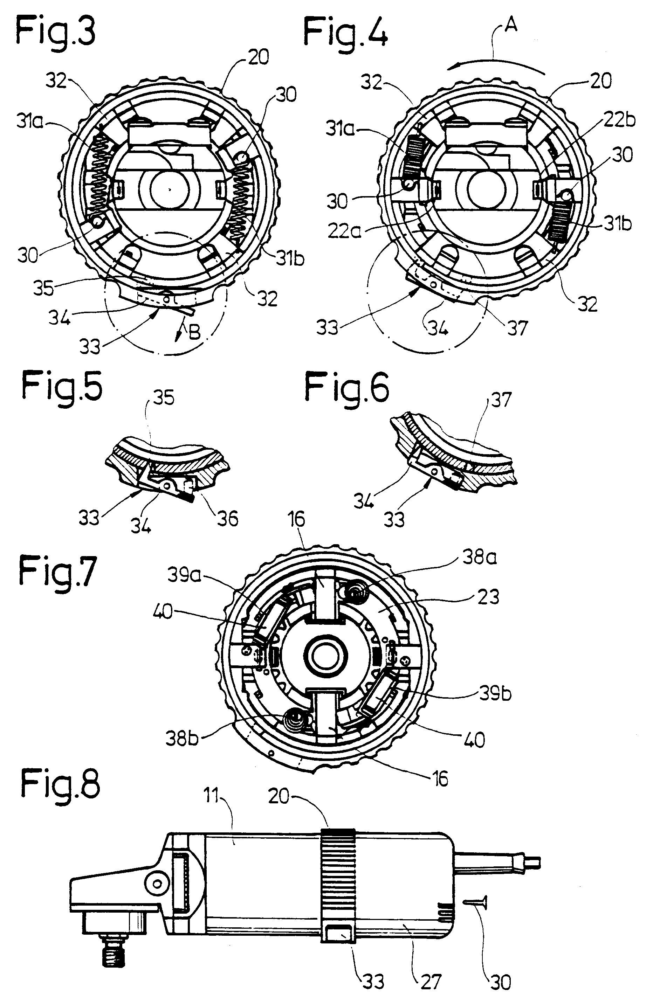

Die Teildarstellung der Fig. 1 zeigt einen elektrischen Universalmotor 10 als geeignete Antriebsquelle, der sich innerhalb eines rohrförmigen Hauptgehäuses 11 befindet und von allgemein zylindrischer Form ist. Das B-Lagerschild 12 ist so ausgebildet, daß es auf dieser Seite eine Nabe 13 für das B-Lager der Rotorwelle bildet, die einstückig von gerippten beidseitigen Trägern 14a, 14b gehalten ist. Auf einer nach außen gerichteten äußeren Ringfläche (nicht sichtbar) des B-Lagerschilds liegt verdrehbar ein auch die Bürsten 15 in Köchern 16 tragender Schaltring, der in der Draufsicht der Fig. 7 sichtbar und dort mit 23 bezeichnet ist. Gegen axiales Abfallen ist der Schaltring 23 von einem Sicherungsring 17 gehalten, der mit nach innen vorspringenden Arretiernasen 18 am B-Lagerschild 12 verankert ist.

Um die Drehbewegung des Schaltringes durchführen zu können, wodurch, wie in dem schon erwähnten Gebrauchsmuster bzw. der entsprechenden DE-OS 39 23 421 beschrieben, eine Drehrichtungsumkehr bzw. das Ein/Ausschalten des Elektromotors möglich ist, können am Schaltring axiale Vorsprünge 19a, 19b vorgesehen sein, die dadurch mit dem äußeren oder innen liegenden, am Gehäuse geführten Stellring 20 in Wirkverbindung treten, daß dieser beidseitig nach innen gerichtete Vorsprünge 21a, 21b aufweist, die die Vorsprünge 19a, 19b. des Schaltrings umfassen, so daß dieser sich bei Verdrehung des äußeren Stellrings 20 mitdreht. Hierdurch lassen sich für die jeweilige Drehrichtung nicht nur die Bürsten entsprechend in einer neuen Winkellage orientieren, sondern auch, falls gewünscht, weitere elektrische Umschaltungen herstellen.

Dabei sind in an sich beliebiger Position, bei dem dargestellten Ausführungsbeispiel innerhalb der beidseitigen Träger 14a, 14b des B-Lagerschilds 12, lediglich zwei Anschlußsteckkontakte (in Fig. 4 bei 22a, 22b erkennbar), die die beiden Stromzuführungen für den Antriebsmotor darstellen und mit einer äußeren Stromzuführung zu verbinden sind, beispielsweise durch Steckverbindung mit einem elektrischen Steckmodul, der so ausgebildet ist, daß mit diesem, soweit erforderlich für das jeweilige spezifische Elektrohandwerkzeug weitere elektrische Schaltvorgänge
durchgeführt werden können, etwa die "Gasgebefunktion" bei einer Handbohrmaschine oder das Ein- und Ausschalten des Elektrohandwerkzeugs dann, wenn die Beeinflussung durch den äußeren Stellring für die Drehrichtungsumkehr reserviert ist. Dies hängt, wie es sich versteht, von der Art des jeweiligen Elektrowerkzeugs ab und natürlich von der durch die Stanzgitterform vorgegebene elektrische Verdrahtung innerhalb des Elektromotors, mit welcher der Schaltring des Elektromotors in entsprechender Kontaktverbindung steht bzw. je nach Verdrehung gebracht werden kann.

Dabei ist in Fig. 1 aus Gründen eines besseren Verständnisses das rohrförmige Hauptgehäuse nicht über den äußeren Stellring 20 in der Zeichenebene nach links hinausgeführt dargestellt. Dies läßt sich genauer der Fig. 2 entnehmen, während man in Fig. 1 die B-seitigen Motoreinzelheiten besser erkennen kann.

Die Schnittdarstellung der Fig. 1 zeigt, wie eine durch innere Abtreppungen gebildete Ringschulter 24 des Stellrings 20 auf der zugewandten äußeren Randkante 25 des Hauptgehäuses aufsitzt. Gegenüberliegend weist der Stellring eine sich axial öffnende Ringausnehmung 26 auf, in die dann zur Sicherung des Stellringes die vordere Randkante eines hinteren Abdeckteilgehäuses 27 eingreift (Fig. 8), welches auf einen inneren Vorsprung 28 des Hauptgehäuses 11 bis zum Anschlag aufgeschoben ist. Dieser Vorsprung 28 ist gegabelt und umfaßt einen oberen Schenkel 28a und einen unteren Schenkel 28b (Fig. 2), wobei in den Zwischenraum zwischen diesen beiden Schenkeln, was nicht Gegenstand der Erfindung ist, der elektrische Schaltmodul eingeschoben werden kann; eine Lüsterklemme 29 dient der Zugentlastung der zugeführten elektrischen Leitung. Beispielsweise der untere Schenkel 28b der Hauptgehäusefortsetzung 28 kann dann dazu dienen, die hintere Gehäuseabdekkung 27 mittels einer geeigneten Schraube, die bei 30 dargestellt ist (Fig. 8), gegen axiales Abziehen zu halten, wodurch gleichzeitig auch der Stellring 20 gesichert ist.

Dient der äußere Stellring 20 zur Ein- und Ausschaltung des Geräts, wie dies bei dem beschriebenen Winkelschleifer der Fall ist, dann weist der Schaltring noch eine zusätzliche Arretiereinrichtung mit automatischer Rückstellung auf, wie in den Figuren 3, 4 und 2 gezeigt. In diesem Fall sind zunächst Rückstellfedern 31a, 31b vorgesehen, die an zusätzlichen Befestigungszapfen 30 an den nach innen gerichteten Vorsprüngen 21a, 21b des Stellrings 20 angreifen. Die Rückstellfedern sind rückwärtig an gehäusefesten Stegen 32 festgemacht, die, sich konusförmig verjüngend, den hinteren gegabelten inneren Gehäusevorsprung 28 des Hauptgehäuses 11 tragen.

Ferner lagert der Stellring 20 noch eine Arretieranordnung 33; bei dem dargestellten Ausführungsbeispiel bestehend aus einer etwa mittig gelagerten Wippe 34, die auf der einen Seite in einer abgebogenen Arretiernase 35 endet und deren andere Seite durch eine eigene kleine Vorspannungs-Druckfeder 36 (Fig.5) so vorgespannt ist, daß die Arretiernase 35 nach innen drückt. Man erkennt aus der Darstellung der Figuren 3, 4 mit 5 und 6, daß dann, wenn der äußere Stellring im Gegenuhrzeigersinn entsprechend dem Pfeil A verdreht wird - bei entsprechender Mitnahme des Schaltrings im Motorinneren über die Vorsprünge 21a, 21b,-bei Erreichen einer vorgegebenen Position die Arretiernase 35 in eine gehäusefeste Ausnehmung 37 einfällt und der äußere Stellring 20 auch bei Loslassen dann in dieser Position verbleibt. Bei dem den Winkelschleifer betreffenden Ausführungsbeispiel läßt sich auf diese Weise das Gerät einschalten und in der Einschaltposition wie geschildert arretieren, wobei das andere Ende der Wippe entsprechend dem Pfeil B in Fig. 3 nach außen tritt. Drückt man dann zum Ausschalten des Geräts auf dieses Wippenende, dann löst sich die Arretiernase 35 wieder aus der Halteöffnung 37, der äußere Stellring 20 schnellt in seine Ursprungsposition zurück, nimmt aufgrund der entsprechend stark bemessenen Kraft der Rückholfedern den Schaltring im Bereich des B-Lagerschildes des Antriebsmotors mit und schaltet auf diese Weise das Gerät ab, gegebenenfalls kann hierdurch aber auch bei Drehrichtungsumkehr eine automatische Rückstellung in eine Vorzugsdrehrichtung realisiert werden.

Da die rückwärtige Kante der Schaltwippe 34 in der eingeschalteten Position über die Abmessungen von Schaltring bzw. Gehäuse hinausragt, genügt es bei entsprechender Positionierung auch schon, daß man das Gerät lediglich ablegt, wodurch aufgrund des geräteeigenen Gewichts die Schaltwippe zurückgedrückt und die Rückbewegung des Stellrings ausgelöst wird. Das Gerät schaltet sich dann aus.
In der Fig. 7 sind schließlich noch die Vorspannungsfedern 38a, 38b für die Kohlen sowie gesonderte Aufnahmetröge 39a, 39b erkennbar, die der Aufnahme von Drosseln 40 für die Entstörung des Antriebsmotors dienen können und ebenfalls vom Schaltring getragen sind.

## Patentansprüche

1. Schaltvorrichtung für die elektrische Umschaltung, nämlich Ein/Ausschalten bzw. Drehrichtungsumkehr, von Elektrowerkzeugen, insbesondere Elektrohandwerkzeugen wie Handbohrmaschine, (Winkel)Schleifer, Säge, Stichsäge, Schlagbohrmaschine, Bohrhammer, Poliergerät u. dgl., mit einem um vorgegebene Winkelbeträge verdrehbaren inneren Schaltring (23) im Bereich des bürstenseitigen B-Lagerschilds des das Werkzeug antreibenden Elektromotors und einer mit dem inneren Schaltring verbundenen manuell von außen verdrehbaren Ringstruktur, dadurch gekennzeichnet, daß die Ringstruktur ein äußerer Stellring (20) ist, der außen auf den geschlossenen Gehäusekörper des Elektrowerkzeugs in Höhe des inneren Schaltrings (23) aufsitzt und von dem unmittelbar mindestens ein nach innen gerichteter Vorsprung (21a, 21b) zum inneren Schaltring (23) geführt ist, derart, daß durch die Winkelverdrehung des Stellrings (20) die elektrische Umschaltung am Antriebsmotor (10) über dessen innerem Schaltring (23) erfolgt.

2. Schaltvorrichtung nach Anspruch 1, dadurch gekennzeichnet, daß der äußere Stellring (23) durch Ringschultern bzw. Ringvorsprünge in seiner axialen Position am Gehäuse (11) des Elektrowerkzeugs gehalten ist.

3. Schaltvorrichtung nach Anspruch 1 oder 2, dadurch gekennzeichnet, daß der Stellring (20) in einer Ausgangsruheposition durch Federvorspannung gehalten ist.

4. Schaltvorrichtung nach Anspruch 3, dadurch gekennzeichnet, daß Vorspannungsfedern (31a, 31b) am Stellring (20) angreifen, die rückwärtig am Gehäuse (11) befestigt sind und deren Rückstellkraft so ausgelegt ist, daß der Stellring (20) unter Mitnahme des inneren Schaltrings (23) am Elektromotor in seine Ausgangsposition zurückgeführt wird.

5. Schaltvorrichtung nach einem oder mehreren der Ansprüche 1-4, dadurch gekennzeichnet, daß der innere Schaltring (23) mit einer die innere Verdrahtung des Elektromotors bildenden, elektrisch leitenden Stanzgitterform in elektrischer Wirkverbindung steht, wobei die Stanzgitterform so ausgebildet ist, daß sie je nach ihrem Leitungsverlauf den Elektromotor ein- oder ausschaltet bzw. in seiner Drehrichtung reversiert.

6. Schaltvorrichtung nach einem der Ansprüche 1-5, dadurch gekennzeichnet, daß am Stellring (20) eine Arretiereinrichtung (33) vorgesehen ist, die den Stellring in seiner gegenüber der Ruheposition ausgelenkten oder aktivierten Endposition arretiert.

7. Schaltvorrichtung nach Anspruch 6, dadurch gekennzeichnet, daß die Arretiereinrichtung (33) eine am Stellring (20) gelagerte Schaltwippe (34) umfaßt, die unter Federvorspannung mit einer Nase (35) im ausgelenkten Zustand des Stellrings (20) in eine Gehäuse-Wandausnehmung (37) eingreift und den Stellring (20) in dieser Position festhält.

8. Schaltvorrichtung nach Anspruch 7, dadurch gekennzeichnet, daß die Schaltwippe (33) etwa mittig gelagert ist und im aktivierten Zustand, in welchem die Arretiernase (35) in der Gehäuseausnehmung (37) sitzt, mit ihrem abgewandten Ende die ungefähren Außenabmessungen des Gehäuses überragt derart, daß auch bei einem lediglichen Ablegen des Elektrohandwerkzeugs die Arretierposition der Schaltwippe automatisch gelöst und der Stellring in seiner Ausgangsposition zurückgeführt wird.

9. Schaltvorrichtung nach einem oder mehreren der Ansprüche 1-8, dadurch gekennzeichnet, daß der Stellring auf eine endseitige Gehäuseringkante (25) eines zylindrischen oder rohrförmigen Hauptgehäuseteils (11) des Elektrohandwerkzeugs aufgesetzt ist und in dieser Position durch einen weiteren hinteren Gehäuseabdeckteil gehalten ist, deren zugewandte vordere Randkante in eine sich axial öffnende Ringausnehmung (26) des Stellrings (20) eingreift.

10. Schaltvorrichtung nach Anspruch 9, dadurch gekennzeichnet, daß der Stellring (20) das Hauptgehäuseteil mit einem schürzenförmigen Ringvorsprung (20a) übergreift.

11. Schaltvorrichtung nach einem oder mehreren der Ansprüche 1-10, dadurch gekennzeichnet, daß die den inneren Schaltring mitnehmenden, vom Stellring (20) ausgehenden Vorsprünge (21a, 21b) axial verlaufende Aufnahmeöffnungen für vom Schaltring (23) des Elektromotors ausgehende axiale Vorsprünge (19a, 19b) aufweisen derart, daß die Mitnahmeposition zwischen Stellring (20) und Schaltring (23) durch axiales Aufschieben des Stellrings (20) auf das den Elektromotor umfassende Hauptgehäuse (11) möglich ist.

12. Schaltvorrichtung nach Anspruch 1, dadurch gekennzeichnet, daß der Stellring innen am Gehäuse (formschlüssig) gehalten ist und mindestens durch eine Gehäuseöffnung zur manuellen Verstellung zugänglich ist.

13. Schaltvorrichtung nach Anspruch 12, dadurch gekennzeichnet, daß der innere Stellring mit einem Betätigungselement durch die Gehäuseöffnung ragt.

## Claims

1. A switching device for the electrical change-over, namely switching on and off or reversal of rotation, of electric tools, in particular electric hand tools such as a hand drill, (angle) grinder, saw, compass saw, percussion drill, hammer drill, polishing tool, etc., comprising an inner switching ring (23) rotatable about predetermined angles in the region of the brush-side B-end shield of the electric motor driving the tool, and comprising a ring structure connected to the inner switching ring and manually rotatable from outside, characterised in that the ring structure is an outer adjusting ring (20) which is mounted on the outside of the enclosed housing body of the electric tool at the level of the inner switching ring (23) and from which at least one inward-pointing projection (21a, 21b) directly extends towards the inner switching ring (23) in such a manner that, as a result of the angular rotation of the adjusting ring (20), the electrical change-over takes place in the drive motor (10) via the inner switching ring (23) thereof.

2. A switching device according to claim 1, characterised in that the outer adjusting ring (20) is held in its axial position on the housing (11) of the electric tool by annular shoulders or annular projections.

3. A switching device according to claim 1 or 2, characterised in that the adjusting ring (20) is held in an initial rest position by initial spring tension.

4. A switching device according to claim 3, characterised in that pretensioning springs (31a, 31b) engage the adjusting ring (20) and are fixed at the rear to the housing (11), their restoring force being such that the adjusting ring (20) is moved back into its initial position, taking with it the inner switching ring (23) on the electric motor.

5. A switching device according to one or more of claims 1-4, characterised in that the inner switching ring (23) is electrically operatively connected to an electrically conductive pressed screen forming the inner wiring of the electric motor, the pressed screen being formed such that it switches the electric motor on or off or reverses its direction of rotation according to its wiring arrangement.

6. A switching device according to any one of claims 1-5, characterised in that a detent device (33) is provided on the adjusting ring (20) and locks the adjusting ring in its end position activated or displaced relative to the rest position.

7. A switching device according to claim 6, characterised in that the detent device (33) comprises a switching rocker (34) mounted on the adjusting ring (20), the said switching rocker (34) engaging, under initial spring tension, in a housing wall recess (37) by means of a projection (35) when the adjusting ring (20) is in the displaced position and secures the adjusting ring (20) in this position.

8. A switching device according to claim 7, characterised in that the switching rocker (33) is mounted substantially centrally and, in the activated state in which the locking projection (35) is located in the housing recess (37), projects beyond the approximate outer dimensions of the housing at its opposite end such that, even if the electric hand tool is simply laid down, the locked position of the switching rocker is automatically released and the adjusting ring is moved back into its initial position.

9. A switching device according to one or more of claims 1-8, characterised in that the adjusting ring is mounted on an end housing edge rim (25) of a cylindrical or tubular main housing part (11) of the electric hand tool and is held in this position by a further, rear housing cover part, the front-facing edge rim of which engages in an axially opening annular recess (26) of the adjusting ring (20).

10. A switching device according to claim 9, characterised in that an apron-type annular projection (20a) of the adjusting ring (20) fits over the main housing part.

11. A switching device according to one or more of claims 1-10, characterised in that the projections (21a, 21b), carrying the inner switching ring and extending from the adjusting ring (20), have axially extending receiving openings for axial projections (19a, 19b) extending from the switching ring (23) of the electric motor such that the locked position between the adjusting ring (20) and the switching ring (23) is possible by axially mounting the adjusting ring (20) on the main housing (11) surrounding the electric motor.

12. A switching device according to claim 1, characterised in that the adjusting ring is (positively) held on the inside of the housing and is accessible through at least one housing opening for manual adjustment.

13. A switching device according to claim 12, characterised in that an actuating member of the inner adjusting ring projects through the housing opening.

## Revendications

1. Dispositif de couplage pour la commutation électrique, c'est-à-dire la fonction marche/arrêt ou l'inversion du sens de rotation d'outils électriques, notamment d'outils électroportatifs tels que des perceuses, des meuleuses d'angle, des scies, des scies sauteuses, des perceuses à percussion, des perforateurs, des ponceuses ou polisseuses, ou analogues comportant une bague de couplage (23), intérieure, susceptible d'être tournée d'un angle prédéterminé, au niveau du panneau de palier (B) du côté des balais du moteur électrique entraînant l'outil et d'une structure annulaire reliée à la bague de couplage intérieure qui peut être tournée manuellement par l'extérieur, caractérisé en ce que la structure annulaire est une bague de réglage (20) extérieure, montée extérieurement sur le corps fermé du boîtier de l'outil électrique, au niveau de la bague de couplage intérieure (23) et dont au moins une saillie (21a, 21b) arrive directement jusqu'à la bague de couplage intérieure (23), de façon qu'en tournant angulairement la bague de réglage (20) on commute électriquement le moteur (10) par sa bague de couplage (23) intérieure.

2. Dispositif de couplage selon la revendication 1, caractérisé en ce que la bague de réglage extérieure (23) est maintenue dans sa position axiale sur le boîtier (11) de l'outil électrique par des épaulements annulaires ou des saillies annulaires.

3. Dispositif de couplage selon la revendication 1 ou 2, caractérisé en ce que la bague de réglage (20) est maintenue dans sa position de repos par une précontrainte par ressort.

4. Dispositif de couplage selon la revendication 3, caractérisé en ce que les ressorts de précontrainte (31a, 31b) agissent sur la bague de réglage (20), ces ressorts étant fixés à l'arrière dans le boîtier (11) et leur force de rappel est telle que la bague de réglage (20) est rappelée dans sa position de repos en entraînant la bague de couplage (23) intérieure du moteur électrique.

5. Dispositif de couplage selon une ou plusieurs des revendications 1-4, caractérisé en ce que la bague de couplage intérieure (23) coopère électriquement avec une structure en forme de grille estampée, conductrice électrique, formant le câblage intérieur du moteur électrique, et cette grille estampée est telle que suivant le tracé des conducteurs, elle met en marche le moteur électrique, le coupe ou en inverse le sens de rotation.

6. Dispositif de couplage selon l'une des revendications 1-5, caractérisé par une installation de blocage (33) prévue sur la bague de réglage (20) qui bloque la bague de réglage dans sa position déplacée par rapport à sa position de repos ou position de fin de course, active.

7. Dispositif de couplage selon la revendication 6, caractérisé en ce que l'installation de blocage (33) comprend une bascule (34) montée dans la bague de réglage (20) et qui sous la précontrainte d'un ressort vient prendre par son bec (35) dans une cavité (37) de la paroi du boîtier, lorsque la bague de réglage (20) est dans son état déplacé et est maintenue dans cette position.

8. Dispositif de couplage selon la revendication 7, caractérisé en ce que la bascule (33) est montée pivotante sensiblement en son milieu et à l'état activé, lorsque le bec de blocage (35) est introduit dans la cavité (37) du boîtier, elle dépasse par son autre extrémité, les dimensions extérieures approximatives du boîtier de façon que, même pour un simple dépôt de l'outil électroportatif, la position de blocage de la bascule soit débloquée automatiquement et que la bague de réglage revienne dans sa position de repos.

9. Dispositif de couplage selon une ou plusieurs des revendications 1-8, caractérisé en ce que la bague de réglage est rapportée sur une arête annulaire d'extrémité (25) du boîtier appartenant à la partie principale (11) cylindrique ou tubulaire du boîtier de l'outil électroportatif et est maintenue dans cette position par une autre partie de recouvrement de boîtier, arrière, dont l'arête de bord avant qui se trouve en regard, pénètre dans une cavité annulaire (26) axialement ouverte de la bague de réglage (20).

10. Dispositif de couplage selon la revendication 9, caractérisé en ce que la bague de réglage (20) dépasse la partie du boîtier principal par une saillie annulaire (20a) en forme de jupe.

11. Dispositif de couplage selon une ou plusieurs des revendications 1-10, caractérisé en ce que les saillies (21a, 21b) partant de la bague de réglage (20) et qui entraînent la bague de couplage intérieur, comportent des ouvertures de réception, dirigées axialement pour les saillies (19a, 19b) partant axialement de la bague de couplage (23) du moteur électrique, de façon à réaliser une position d'entraînement entre la bague de réglage (20) et la bague de couplage (23), par emmanchement axial de la bague de réglage (20) sur le boîtier principal (11) entourant le moteur électrique.

12. Dispositif de couplage selon la revendication 1, caractérisé en ce que la bague de réglage est maintenue intérieurement sur le boîtier (par une liaison par la forme) et est accessible au moins à travers une ouverture du boîtier pour la commande manuelle.

13. Dispositif de couplage selon la revendication 12, caractérisé en ce que la bague intérieure de réglage est en saillie par un élément de manoeuvre à travers l'ouverture du boîtier.
